# EUROPEAN PATENT APPLICATION

(11) **EP 0 881 337 A1**
(43) Date of publication of application: **02.12.1998**
(21) Application number: 98109779.3
(22) Date of filing: 28.05.1998
(51) Int. Cl.: E04C 5/16, F16B 2/10, E04G 7/26

(54) **Fixing reinforcing bars**

(30) Priority: 30.05.1997 GB 9711061
(71) Applicant: Gray Engineering Limited, Nr. Lichfield, Staffordshire WS13 HS (GB)
(72) Inventor: Render, Stephen, Lichfield, Staffordshire WS13 6ET (GB)
(74) Representative: Dodd, Graham Marshall

(57) **Abstract**

A clamping device comprising two parts (10, 11) together defining a formation for receiving a reinforcing bar, said parts being movable relative to one another under the influence of fastening means (17, 18, 19) to clamp the reinforcing bar in said formation, wherein at least one of said parts (10) is shaped (15) to interfit with keying formations provided on the reinforcing bar surface so as to resist lengthwise displacement of the reinforcing bar in said formation.

## Description

### Description of Invention

This invention relates to fixing reinforcing bars to form assemblies of such bars, for making reinforced concrete structures.

For making structures out of reinforced concrete, an assembly of reinforcing bars has firstly to be created, with the required number of reinforcing bars held in the required disposition relative to one another. Then such an assembly of reinforcing bars, commonly and herein termed a cage, appropriately positioned, has concrete poured around it so that when the concrete has set the reinforced concrete structure exists. The cage may be completely constructed on site from individual reinforcing bars, or may be constructed off site and transported complete, or may be assembled on site from cage parts prefabricated off site, and the present invention has particular, although not exclusive, application to the construction of cages in the last-mentioned manner. In any event, the complete cage has to have sufficient structural integrity to enable it to be handled, e.g. lifted, on site without coming apart or distorting.

One way in which a reinforcing bar can be held to another reinforcing bar or bars, or a structure thereof, is by the use of a clamping device. When a clamping device is used, it is important that it should grip one or more reinforcing bars it is clamping sufficiently well to ensure that a bar cannot be relatively displaced in the direction of its length under forces likely to be encountered in handling a cage on site. If it were possible for a reinforcing bar to move longitudinally within a clamping device, under forces likely to be encountered, for example, when a cage is lifted, at best the cage could become distorted or at worst could even come apart which is potentially dangerous.

Accordingly it is an object of the present invention to provide for greater security of a reinforcing bar held by a clamping device.

According to one aspect of the present invention, we provide a clamping device comprising two parts together defining a formation for receiving a reinforcing bar, said parts being movable relative to one another under the influence of fastening means to clamp the reinforcing bar in said formation, wherein at least one of said parts is shaped to interfit with keying formations provided on the reinforcing bar surface so as to resist lengthwise displacement of the reinforcing bar in said formation.

It will be appreciated that reinforcing bars for concrete are characteristically round bars provided with surface formations to key with the concrete. Usually such keying formations comprise ribs which are helically disposed on the bars. In accordance with the present invention, the clamping device interfits with such ribs to hold the reinforcing bar against lengthwise displacement.

One of said parts of the clamping device may comprise a surface which defines a part of said formation and from which at least one projection extends so as to be able to engage a keying formation on the reinforcing bar.

Preferably such surface is a substantially arcuate surface having a radius of curvature which substantially corresponds to that of the envelope of a reinforcing bar. Then, a reinforcing bar can rest against said surface with its keying formations lying against such surface, and with the projection or projections from such surface extending between the keying formations possibly to contact the surface of the reinforcing bar therebetween.

A further part of the clamping device which together with the first said part defines said formation may comprise an element whose dimension, in the direction of the length of a reinforcing bar with which it cooperates, is sufficiently small to contact the surface of a reinforcing bar between the keying formations thereof.

Preferably the two parts of die clamping device are pivotally movable relative to one another.

The fastening means for the clamping device may comprise a screw-threaded fastener engaged by a nut tightenable to urge said parts relative to one another to clamp a reinforcing bar in the formation therebetween.

According to another aspect of the invention, we provide the combination of a clamping device according to the first aspect of the invention as above set forth, together with a reinforcing bar clamped in said formation of the device.

According to yet another aspect of the invention, we provide a cage for reinforcing concrete, including at least one reinforcing bar held by a respective clamping device in accordance with the invention.

The invention will now be described by way of example with reference to the accompanying drawings, of which:-
Figure 1 is a perspective view of a clamping device in accordance with the invention, in a first ("open") condition;
Figure 2 is a perspective view of the clamping device of Figure 1, in use to clamp a reinforcing bar.

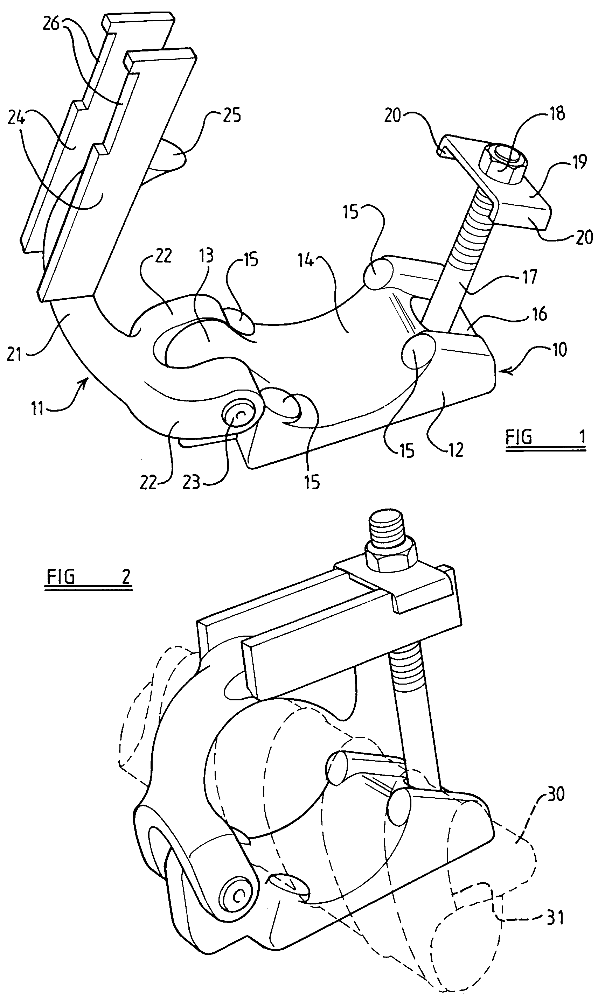

Referring firstly to Figure 1 of the drawings, a clamping device comprises a base indicated generally at 10 and a cover indicated generally at 11. The base 10 has a main body portion 12 which is generally rectangular in plan view and which has a pivot lug portion 13 extending therefrom. The body portion 12 defines a substantially arcuate surface 14. At the four extremities of this surface there are four projections 15, which protrude above the generally arcuate line of the surface 14. Opposite the pivot lug 13 the base 10 has an opening 16 through which extends a threaded fastener 17 in the form, of a bolt, the fastener 17 having a head, not shown, which lies in a recess in the underside of the base beneath the opening 16. The opening 16 provides a substantial clearance for the fastener 17 to enable a certain amount of pivoting movement of the fastener relative to the base. The free end of the fastener 17 carries a nut 18 and washer 19 which is generally rectangular in shape with downturned lips 20 at its opposite ends.

The base 10 may be, for example, forged or cast of ferrous metal and the projections 15 may be provided in the course of such a manufacturing process. However, it will be appreciated that the configuration of the base, with the exception of the provision of the projections 15, is generally that of the base portion of a type of clamping device which is well known for use in the scaffolding structures and accordingly is commonly referred to as a scaffold clamp. A known scaffold clamp may have its base part modified to be suitable for use in the invention by having projections 15 applied to it, e.g. as blobs of weld metal.

The cover part 11 of the clamping device comprises a generally arcuate body part 21 which at one end is formed into two parts 22 which lie to opposite sides of the pivot lug 13 and are secured thereto by a pivot pin 23 passing through aligned apertures therein. The pivot pin 23 may be held captive by rivetting its end or ends. At its end remote from the parts 22, the body portion 21 has spaced parallel portions 24 provided thereon and as illustrated they are individual elements of plate metal welded to the body portion 21 although they preferably are forged integrally therewith. As above described, the body portion 21 is generally arcuate and the portions 24 extend generally tangentially thereto from a position about mid-way between the ends of the body portion 21. Beyond where the portions 24 are attached, the body portion 21 continues its arcuate shape to end in a nose 25.

The portions 24 are spaced from one another sufficiently for the fastener 17 to be received between their free ends. The upper edges of the portions 24 adjacent their free ends have recesses 26 for receiving the washer 19.

Figure 2 shows the clamping device in use with a reinforcing bar held thereby. The reinforcing bar shown in broken lines and indicated at 30 is a generally round bar having keying formations in the form of generally helical ribs 31 on its surface. When the reinforcing bar is placed on the base 10 of the clamping device, one of the ribs 31 will lie against the arcuate surface 14 of the base whilst the projections 15 will extend between the ribs of the reinforcing bar possibly to contact the surface of the bar therebetween.

The arcuate body portion 21 of the cover part 11 of the clamping device is dimensioned so as to be able to extend between and contact the surface of the reinforcing bar between adjacent rims thereon. When a reinforcing bar has been placed in relation to the clamping device and the cover part 11 pivoted relative to the base 10 to thus engage the reinforcing bar, the fastener 17 can be moved to lie between the free ends of the portions 24, the washer 19 engaged with the recesses 26, and the nut 18 tightened so that the reinforcing bar is firmly clamped by the clamping device. In the course of such tightening, the engagement of the washer 19 with the recesses 26 prevents the portions 24 from spreading apart at their free ends, and hold the fastener 17 in the correct position relative thereto, so that the device can be tightened sufficiently to hold the reinforcing bar firmly clamped against loads likely to be encountered in use.

A clamping device as above described may be used in a cage for reinforcing concrete by welding one or more such clamping devices to reinforcing bars or prefabricated cage parts made of such reinforcing bars, and then used to secure further reinforcing bars thereto. An example of a cage for reinforcing concrete structures, in particular piles, is disclosed in European Patent 0608068.

## Claims

1. A clamping device comprising two parts (10, 11) together defining a formation for receiving a reinforcing bar (30), said parts being movable relative to one another under the influence of fastening means (17-19) to clamp the reinforcing bar in said formation, characterised in that at least one of said parts (10, 11) is shaped to interfit with keying formations (31) provided on the reinforcing bar surface so as to resist lengthwise displacement of the reinforcing bar in said formation.

2. A clamping device according to Claim 1 further characterised in that one (10) of said parts (10, 11) of the clamping device comprises a surface (14) which defines a part of said formation and from which surface at least one projection (15) extends so as to be able to engage a keying formation on the reinforcing bar.

3. A clamping device according to Claim 2 further characterised in that said surface (14) is a substantially arcuate surface having a radius of curvature substantially corresponding to that of the envelope of a reinforcing bar.

4. A clamping device according to Claim 3 further characterised in that a further part (11) of the clamping device, which together with the first said part defines said formation, comprises an element (21) whose dimension, in the direction of the length of a reinforcing bar with which it cooperates, is sufficiently small to contact the surface of the reinforcing bar between the keying formations thereof.

5. A clamping device according to any one of the preceding claims further characterised in that said two parts (10, 11) of the device are pivotally movable relative to one another.

6. A clamping device according to any one of the preceding claims further characterised in that the fastening means comprises a screw-threaded fastener (17) engaged by a nut (18), tightenable to urge said parts relative to one another for clamping a reinforcing bar in the formation therebetween.

7. The combination of a reinforcing bar (30) and a clamping device therefor, said reinforcing bar comprising keying formations (31) projecting from its surface and said clamping device comprising two parts (10, 11) together defining a formation wherein said reinforcing bar is received, said parts being movable relative to one another under the influence of fastening means (17-19) to clamp the reinforcing bar in said formation, wherein at least one of said parts (10, 11) interfits with said keying formations (31) to resist lengthwise displacement of the reinforcing bar in said formations.

8. The combination according to Claim 7 further characterised in that one (10) of said parts comprises a substantially arcuate surface (14) having a radius of curvature which substantially corresponds to that of the envelope of the reinforcing bar (30), so that said reinforcing bar rests against said surface with its keying formations (31) lying against said surface, and with at least one projection (15) extending from said surface and extending between the keying formations of the reinforcing bar.

9. The combination according to Claim 8 further characterised in that said projection or projections from said surface contact the reinforcing bar surface between the keying formations thereof.

10. The combination according to Claim 8 or Claim 9 further characterised in that a further part of the clamping device, which together with the first said part defines said formation, comprises an element (21) whose dimension, in the direction of the length of the reinforcing bar, enables said element to contact the surface of the reinforcing bar between the keying formations thereof.

11. A cage for reinforcing concrete, including at least one reinforcing bar held by a clamping device as claimed in any one of the preceding claims.
